# FASCICULE DE BREVET EUROPEEN

(11) **EP 4 251 507 B1**
(45) Date de publication et mention de la délivrance du brevet: **15.07.2026**
(21) Numéro de dépôt: 21819459.5
(22) Date de dépôt: 26.11.2021
(51) Int. Cl.: B62M 11/06, B62M 6/55, B62M 25/08, F16H 3/089, F16H 63/30, F16H 37/04, F16H 63/08, F16H 63/16, F16H 3/083

(54) **DISPOSITIF DE CHANGEMENT DE VITESSE ET ENGIN DE MOBILITÉ ASSOCIÉ**
GANGSCHALTVORRICHTUNG UND ZUGEHÖRIGES MOBILITÄTSFAHRZEUG
GEAR SHIFT DEVICE AND ASSOCIATED MOBILITY VEHICLE

(30) Priorité: 27.11.2020 FR 2012292; 16.12.2020 FR 2013339
(43) Date de publication de la demande: 04.10.2023
(73) Titulaire: VALEO EMBRAYAGES, 80009 Amiens (FR)
(72) Inventeur: CAILLAUD, Jonathan, 38070 SAINT QUENTIN FALLAVIER (FR); SIEGWART, Jean Baptiste, 38070 SAINT QUENTIN FALLAVIER (FR); DORET, Quentin, 38070 SAINT QUENTIN FALLAVIER (FR); LAURENS, Christophe, 38070 SAINT QUENTIN FALLAVIER (FR); ROUMEAS, David, 07340 FELINES (FR)
(74) Mandataire: Valeo Powertrain Systems
(86) Numéro de dépôt international: PCT/EP2021/083182
(87) Numéro de publication internationale: WO 2022/112506

(56) Documents cités:
- EP-A1- 0 446 087
- CN-U- 208 870 981
- FR-A1- 2 805 587
- FR-A1- 2 975 367

## Description

Le domaine de la présente invention est celui de la mobilité dite douce, et plus particulièrement celui des engins de mobilités combinant propulsion électrique et force musculaire, à savoir les vélos à assistance électrique.

Lors du déplacement en vélo, la force motrice est fournie par le cycliste, elle est transmise aux roues par l'intermédiaire d'un système de manivelle tournant autour d'un axe de pédalier qui entraîne la roue arrière généralement par une chaîne.

Des boites de vitesses pour cycles sont connues de l'art antérieur. En particulier la publication FR2975367 A1 divulgue un dispositif de changement de vitesses pour vélos comportant une boîte de vitesses à engrenages et une navette coulissante pour effectuer la sélection du rapport. Le déplacement axial de la navette est commandé par l'intermédiaire de deux câbles reliés à une poignée tournante placée au guidon du vélo. Ce système nécessite de nombreuse pièces. Sa fabrication et sa maintenance sont complexes. En particulier la commande par câbles demande des réglage précis et réguliers. Il existe un besoin pour simplifier et automatiser les boites de vitesses pour cycles.

Alors que le domaine des véhicules légers à pédalier pour le transport de biens ou des personnes se diversifie il existe également un besoin pour des boites de vitesse automatiques et électriques.

Pour répondre au moins en partie à ces besoins, l'invention, selon un premier aspect a pour objet un dispositif de changement de vitesse pour engin de mobilité du type vélo à assistance électrique, ledit dispositif présentant une pluralité de krapports entre un premier rapport dit rapport n° 1 et un rapport supérieur dit rapport k ledit dispositif de changement de vitesse comportant
- une série de k pignons d'entrée agencés pour tourner librement autour d'un arbre de sélection, ledit arbre de sélection logeant une vis sans fin et une navette
- une série de k pignons de sortie, solidaires en rotation d'un arbre creux , ledit arbre creux étant agencé pour entourer un axe de pédalier de l' engin de mobilité,
- un actionneur de changement de vitesse agencé pour déplacer la navette le long de la vis sans fin entre une pluralité de k positions et engager un rapport sélectionné .

Chacun des rapports présente un ratio particulier, entre la vitesse de sortie et la vitesse d'entrée du dispositif de changement de vitesse.

Le nombre de positions de la navette est au moins égal au nombre de rapports du dispositif de changement de vitesse.

Chaque rapport correspond à une position particulière de la navette dans laquelle le pignon d'entrée du rapport sélectionné engrène le pignon de sortie correspondant.

Dès que l'utilisateur pédale, l'arbre creuxtourne, entrainant la navette. Grâce à l'invention, lors d'un changement de vitesse la vis sans fin est entrainée en rotation par l'actionneur de changement de vitesse. Le mouvement de rotation de la vis est transformé en mouvement de translation de la navette qui se déplace dans la position correspondant au rapport sélectionné.

L'arbre creux est ici un axe de sélection, les deux expressions sont utilisées de façon équivalente dans la présente demande.

L'invention propose ainsi un dispositif de changement de vitesse compact, d'encombrement réduit.

La vis sans fin entrainée par l'actionneur de changement de vitesse supprime les câbles de l'art antérieur et procure ainsi une solution plus fiable, de maintenance aisée.

L'actionneur de changement de vitesse comporte des moyens mécaniques de translation de la navette, notamment des moyens de transformation d'un mouvement de rotation en mouvement de translation. L'actionneur de changement de vitesse comporte également des moyens électriques de déplacement de la navette, notamment un motoréducteur. De façon avantageuse, le dispositif de changement de vitesse selon l'invention présente seule ou en combinaison l'une ou l'autre des caractéristiques ci-dessous :
- la navette est agencée pour, dans chaque position correspondant à un rapport, engager un pignon d'entrée associé pour qu'il engrène avec le pignon de sortie associé audit rapport.
- pour, dans chaque position correspondant à un rapport, engager un pignon d'entrée pour qu'il engrène avec un pignon de sortie, les pignon d'entrée et pignon de sortie étant associés audit rapport.
- la navette logeant au moins un organe de rappel, en particulier agencé pour coopérer avec au moins une bille de l'arbre de sélection. Grâce à ce dispositif bille-ressort la navette peut engager un pignon d'entrée pour qu'il engrène avec le pignon de sortie associé. La navette peut loger 1 ou plusieurs organes de rappel, par exemple entre un et six organes de rappel. Pour chaque rapport de vitesse, le ou les organes de rappel coopèrent avec une ou plusieurs billes de l'arbre de sélection, par exemple entre par exemple entre une et six billes. Pour un rapport de vitesse donné, le nombre de billes de l'arbre de sélection est notamment inférieur ou égal au nombre d'organes de rappel de la navette.
- la navette entoure la vis sans fin.
- le dispositif de changement de vitesse présente entre 2 et 12 rapports, voire entre 5 et 9 rapports.
- le dispositif de changement de vitesse comporte une liaison pivot.
- l'actionneur de changement de vitesse comporte un moteur et un réducteur et/ou un train épicycloïdal. Le réducteur comporte en particulier une pluralité de pignons positionnés entre le moteur et la vis sans fin. Dans la présente demande on utilise le terme motoréducteur pour désigner selon les modes de réalisation le moteur, le réducteur et/ou le train épicycloïdal.
- l'actionneur de changement de vitesse est agencé pour déplacer la navette entre les positions prédéfinies suite à une commande de sélection de rapport provenant d'un conducteur de l'engin de mobilité et/ou d'une unité de pilotage de l'engin de mobilité.
- la navette est apte à prendre une position dite position neutre pour laquelle aucun rapport vitesse n'est engagée. En d'autre termes, la navette est dans une position dans laquelle elle n'est engagée avec aucun pignon d'entrée/ Les couples pignon d'entrée-pignon de sortie n'engrènent pas. En particulier, lorsque la navette est en position neutre, autrement dit le dispositif de changement de vitesse est dans un rapport neutre, le mouvement du pédalier ne permet pas de propulser le vélo
- la navette est apte à prendre une position de marche arrière qui permet lorsqu' elle est enclenchée de propulser l'engin de mobilité en marche arrière tout en pédalant en marche avant.

Selon un premier mode de réalisation, le dispositif de changement comporte un rail le long duquel se déplace la navette. Le rail est notamment logé dans l'arbre de sélection. La navette peut comporter sur toute sa longueur au moins une goulotte axiale dans laquelle se positionne le rail. La goulotte, ou une des goulottes, sert ainsi de maintien au rail.

Quand on ne change pas de rapport de vitesse la vis sans fin ne tourne pas.

Lors d'un changement de rapport de vitesse la vis sans fin est entrainée en rotation par l'actionneur de changement de vitesse.

La navette est en particulier reliée au rail par un écrou. Le rail fait un appui linéaire qui empêche la rotation de l'écrou. Le mouvement axial de l'écrou entraine la navette et permet ainsi le passage de rapport.

L'écrou est en particulier logé à l'intérieur de la navette.

Le rail et l'écrou font ainsi partie des moyens mécaniques de translation de la navette. Ils forment une liaison pivot entre la vis sans fin et la navette, transformant le mouvement de rotation de la vis sans fin en mouvement de translation de la navette.

Selon un deuxième mode de réalisation, le dispositif de changement de vitesse comporte au moins un train épicycloïdal. Ce dernier remplace le rail et l'écrou du mode précédent. Le train épicycloïdal fait ici partie des moyens mécaniques de translation de la navette. Le train épicycloïdal est en particulier un réducteur épicycloïdal double comportant une couronne intérieure solidaire de l'axe de sélection et une couronne extérieure solidaire de la vis sans fin. Les deux couronnes, intérieure et extérieure, sont liées par au moins trois pignons satellites.

En régime stable de roulage un rapport est enclenché, la navette se trouve dans la position correspondant audit rapport permettant aux pignons d'entrée et de sortie correspondants d'engrener. La vis sans fin, l'axe de sélection et la navette tournent à la même vitesse. Pour changer de rapport, le motoréducteur fait de façon temporaire tourner la couronne extérieure d'un angle déterminé qui dépend du déplacement nécessaire de la navette entre les positions correspondant respectivement au rapport initial et au rapport souhaité. Suite au décalage angulaire ainsi créé entre la couronne intérieure et la couronne extérieure le ratio entre la rotation de chaque couronne n'est temporairement plus égal à un. La navette est ainsi entrainée en translation jusqu'à atteindre une nouvelle position correspondant au nouveau rapport sélectionné.

Selon un aspect non-revendiqué, la présente demande a aussi pour objet un ensemble de transmission pour engin de mobilité, ledit ensemble de transmission comportant un moteur électrique, notamment agencé pour fournir tout ou partie de l'énergie pour la propulsion de l'engin, et un dispositif de changement de vitesse tel que décrit précédemment.

Selon un autre de ses aspects l'invention a pour objet un engin de mobilité du type vélo à assistance électrique comportant un dispositif de changement de vitesse, tel que décrit précédemment

L'engin peut comporter une source d'énergie rechargeable, notamment une batterie pour alimenter le dispositif moto réducteur. Ladite batterie est de préférence agencée pour alimenter en énergie les différents organes de l'engin de mobilité, en particulier l'éclairage, un système de localisation/navigation optionnel, ... cette liste étant non limitative.

Dans un mode de réalisation particulière, l'engin de mobilité comporte un moteur électrique, muni par exemple d'un réducteur. L'engin de mobilité est en particulier agencé pour que le moteur électrique puisse fournir du couple lorsque la vitesse instantanée de l'engin de mobilité est inférieure à une valeur seuil.

Dans un autre exemple non-revendiqué, l'engin de mobilité est sans assistance électrique.

Selon un aspect non-revendiqué, la présente demande a aussi pour objet un procédé de pilotage d'un dispositif de changement de vitesse, tel que décrit précédemment.

Le procédé comporte en particulier une étape d'enclenchement d'un rapport sélectionné du dispositif de changement de vitesse. Lors de cette étape, une unité de pilotage commande l'actionneur de changement de vitesse à partir d'une consigne de l'utilisateur indiquant le rapport choisi.

### Brève description des figures

D'autres caractéristiques, détails et avantages de l'invention ressortiront plus clairement à la lecture de la description donnée ci-après à titre indicatif en relation avec des dessins dans lesquels :
La [Figure 1] est une vue d'un engin de mobilité selon un des aspects de l'invention,
la [Figure 2] illustre l'ensemble de transmission de l'engin de mobilité de la Figure 1,
les figures [Fig. 3a], [Fig. 3b] et [Fig. 3c] présentent en coupe différentes vues d'un dispositif de changement de vitesse selon un premier mode de réalisation de l'invention,
la [Figure 4] illustre un boitier logeant un dispositif de changement de vitesse selon l'invention,
les figures [Figure 5] et [Figure 6] illustrent en coupe un dispositif de changement de vitesse selon un deuxième mode de réalisation de l'invention,
les figures [Fig. 7a] à [Fig. 7g] représentent schématiquement différentes variantes d'un actionneur de changement de vitesse selon le premier mode de réalisation de l'invention, et
les figures [Fig. 8a] à [Fig. 8g] représentent schématiquement différentes variantes d'un actionneur de changement de vitesse selon le deuxième mode de réalisation de l'invention.

### Description détaillée de l'invention

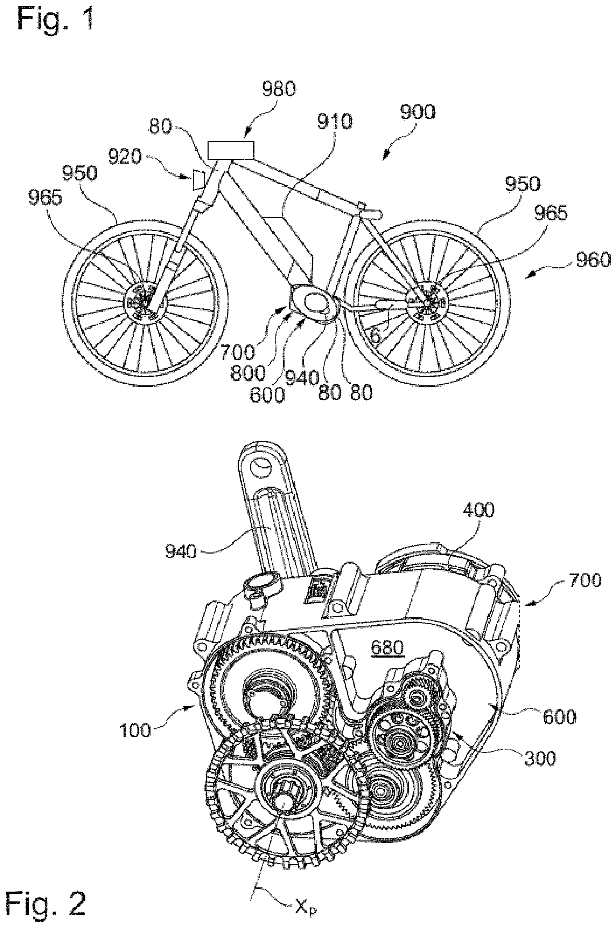

La Figure 1 illustre un engin de mobilité 900 selon un des aspects de l'invention. L'engin 900 est un vélo à assistance électrique comportant un moteur électrique 300 d'axe de rotation Xₘ. Ledit moteur électrique est agencé pour assurer une partie de la propulsion dudit engin.

Lors du déplacement sans assistance électrique, la force motrice est fournie par le cycliste, elle est transmise aux roues 950 par l'intermédiaire de deux pédales toumant autour d'un axe de pédalier Xp qui entraîne la roue arrière par une chaîne.

Comme le montre la Figure 1, l'engin 900 comporte une unité de pilotage 800 ainsi que plusieurs capteurs 80, situés en particulier au niveau du pédalier, sur le cadre du vélo ou au niveau d'une roue.

L'engin 900 ici représenté comporte également un dispositif de stockage d'énergie sous forme d'une batterie 910, un système d'éclairage 920, un pédalier 940 d'axe Xp, un système de localisation et/ou navigation 980 ainsi qu'un système interface homme-machine 990 comportant notamment un écran tactile apte à afficher des informations pour et/ou prendre en compte les demandes dudit utilisateur. Le système interface homme-machine 990 est en particulier relié au système de localisation 980 et sert d'interface de navigation. L'invention n'est pas limitée à un système interface homme-machine particulier, et peut comporter tout système connu de l'homme du métier.

Les roues 950 sont munies d'un système de freinage 960, comportant notamment des freins à disque 965.

L'engin 900 comporte un ensemble de transmission 700 illustré Figure 2. L'ensemble de transmission 700 comporte un dispositif de changement de vitesse 100 selon l'invention et un moteur électrique 300 d'axe de rotation Xm pour fournir une partie de la puissance pour la propulsion de l'engin 900.

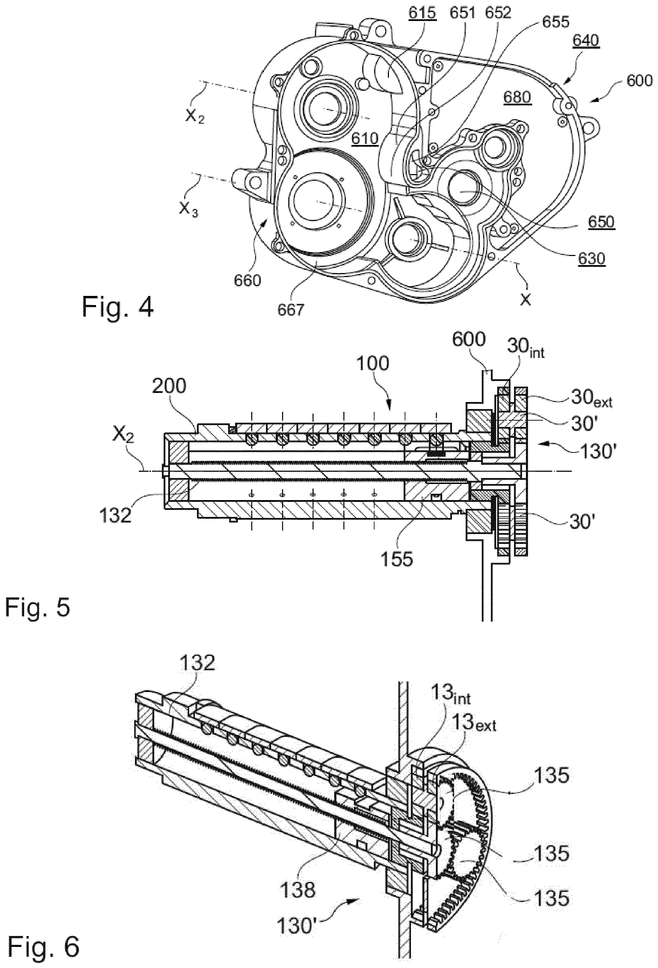

L'ensemble de transmission 700 est au moins en partie logé dans un boîtier600 (illustré figure 4) ici positionné au niveau du pédalier 940 dont l'axe est confondu avec l'axe de sortie X₃ du dispositif de changement de vitesse 100.

Le changement de vitesse est automatique et électrique.

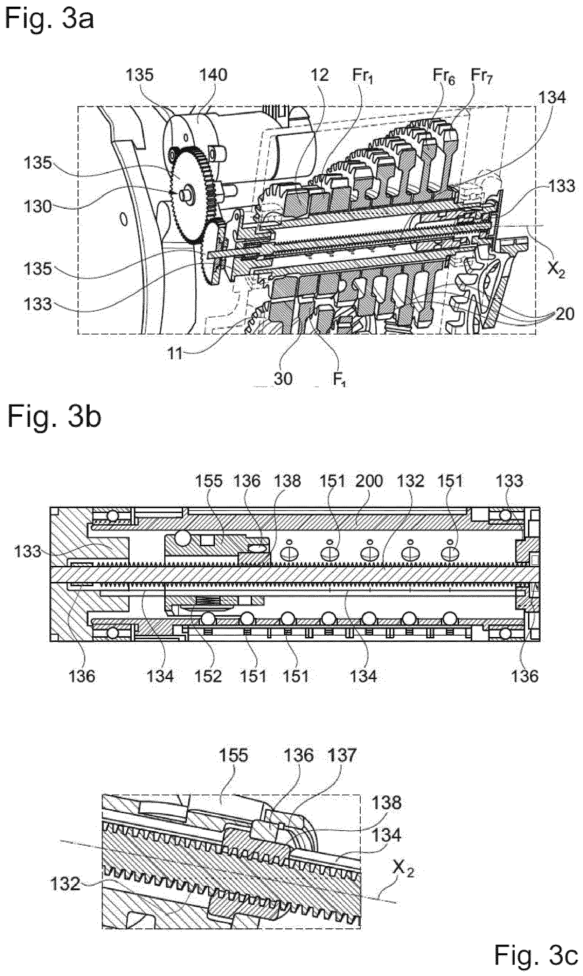

Le dispositif de changement de vitesse 100 illustré figures 3a et suivantes présente une pluralité de 7 rapports entre un premier rapport dit rapport n°1 et un rapport supérieur dit rapport 7,

Il comporte une série de 7 pinions de sortie 30 d'axe X₃, de référence F ₁ à F₇, solidaires en rotation d'un arbre creux et une série de 7 pinions d'entrée 20, de référence Fr₁ à Fr₇ agencés pour tourner librement autour d'un arbre de sélection 200. Ce dernier loge une navette 155 entourant une vis sans fin 132 du dispositif de changement de vitesse 100. Un actionneur de changement de vitesse 150 est agencé pour déplacer la navette 155 le long de la vis sans fin 132 entre 7 positions de P₁ à P₇ et engager un rapport sélectionné.

Le dispositif est compact, l'arbre de sélection 200 est creux

L'actionneur de changement de vitesse 150 inclut des moyens électriques de déplacement de la navette, sous forme d'un motoréducteur. Celui-ci comporte un moteur 140 et un réducteur 130. L'actionneur de changement de vitesse 150 comporte aussi des moyens mécaniques de translation de la navette 155 notamment des moyens de transformation d'un mouvement de rotation en mouvement de translation.

L'ensemble motoréducteur comporte ici un pignon 135 sur axe de la vis sans fin 132, un pignon 135 intermédiaire et un pignon 135 sur l'axe Xm du moteur 140. Les dentures des pignon 135 peuvent être droites comme illustré ou hélicoïdales dans une variante non illustrée.

Comme le montre la figure 3a, le changement de rapport est assuré par une navette 155 coulissante sous les pignons libres 30 de la boîte de vitesses.

L'actionneur de changement de vitesse 150 permet le déplacement axial de la navette le long d'une vis sans fin 132 par une liaison cinématique hélicoïdale.

La navette 155 s'arrête donc sous le pignon d'entrée Fri correspondant au rapport i sélectionné. Un système ressort/bille tel que décrit dans la demande française FR2975367 A1 (illustré ici plus en détail figure 5) permet de bloquer en rotation ce-dit pignon d'entrée Fri. Une fois enclenché, le pignon d'entrée Fri engrène et transmet les efforts au pignon de sortie Fi et ainsi au pignon de chaîne lié à la roue du vélo.

Le guidage en rotation de la vis sans fin 132 est par exemple assuré à l'aide de roulements à chacune de ses extrémités. La Figure 3a illustre notamment une douille à aiguille du côté des pignons 135 du réducteur 130 et un roulement à bille à l'autre extrémité de la vis sans fin 132. Les figures 3b et 3c représentent des vues de détail du dispositif de changement de vitesse de la figure 3a ,

Alors que la navette 155 est illustrée sur la figure 3a dans la position P₇ correspondant à un rapport n°7, ici rapport supérieur et qu'elle engage le pignon d'entrée Fr₇ pour qu'il engrène avec le pignon de sortie F₇, sur la figure 3b la navette 155 est dans la position P₁ correspondant à un rapport n°1 et engage le pignon d'entrée Fr₁ grâce à un dispositif bille-ressort. La navette loge un organe de rappel 152 qui coopère avec une bille 151 de l'arbre de sélection 200.

La navette 155 est en outre reliée à un rail 134 par un écrou138.

Si l'engin 900 roule dans un rapport i, sans en changer, la vis sans fin 132 ne tourne pas. Comme le montre la figure 3c, la navette 155 entourant l'écrou 138 peut tourner grâce au roulement 136 ici maintenu par un clip 137.

Lors d'un changement de rapport de vitesse la vis sans fin 132 est entrainée en rotation par l'actionneur de changement de vitesse 150. La vis sans fin 134 est entrainée en rotation par l'actionneur de changement de vitesse 150 provoquant le mouvement axial de l'écrou 138 qui entraine la navette 155 et permet ainsi le passage de rapport. Grâce à la liaison pivot ainsi réalisée le mouvement de rotation de la vis sans fin 132 est transformé en mouvement de translation de la navette 155. Une butée 133 limite à chaque extrémité le déplacement de la navette 155. Les butées 133 sont par exemple creuse comme illustré et logent des roulements 136 servant à supporter et guider la vis sans fin 132.

Dans une variante non représentée la navette 155 est apte à prendre une position dite position neutre P0 pour laquelle aucun rapport de vitesse n'est engagé.

Dans l'exemple de dispositif de changement de vitesse décrit précédemment l'actionneur de changement de vitesse 150 comporte des pignons droits. Dans le cadre de l'invention le motoréducteur peut comporter des pignons hélicoïdaux

La Figure 4 illustre plus en détail le boîtier 600 de l'engin de mobilité 900 de la figure 1.

Le boitier 600 comporte un carter 660 délimitant un premier logement 610 agencé pour loger les engrenages du dispositif changement de vitesse 100. Le carter 660 délimite également plusieurs deuxièmes logements, distincts les uns des autres. Les logements 640, 630, 615, et 680 sont agencés pour loger respectivement le moteur électrique 400, respectivement le réducteur 300, l'actionneur de changement de vitesse 150 et l'unité de pilotage 800 de l'engin de mobilité. Les deuxièmes logements sont de préférence étanches, en particulier celui agencé pour contenir l'unité de pilotage 800.

Le carter 660 logeant le dispositif changement de vitesse 100 est fermé par deux flasques latéraux667. Le boitier 600 est illustré vide et avec seulement un flasque 667sur la Figure 4 afin de rendre mieux visibles les différents premier et deuxièmes logements. Le premier logement 610 présente deux trous en regard dans les flasques latéraux 667 pour accueillir l'axe de pédalier de l'engin de mobilité 900.

Les Figures 5 et 6 concernent le deuxième mode de réalisation. Le dispositif de changement de vitesse 100 comporte un train épicycloïdal 130' comportant une couronne intérieure 30 int solidaire de l'axe de sélection 200 et une couronne extérieure 30 ext solidaire de la vis sans fin 132. La couronne intérieure 30 int et la couronne extérieure 30 ext sont liées par trois pignons satellites 135.

En régime stable de roulage la vis sans fin 132, l'axe de sélection 200 et la navette 155 tournent à la même vitesse. Pour changer de rapport, le motoréducteur 140 fait de façon temporaire tourner la couronne extérieure d'un angle déterminé qui dépend du déplacement nécessaire de la navette 155 entre les positions correspondant respectivement au rapport initial et au rapport souhaité. Suite au décalage angulaire ainsi créé entre la couronne intérieure 30int et la couronne extérieure30 ext le ratio entre la rotation de chaque couronne n'est temporairement plus égal à un. La navette 155 est ainsi entrainée en translation jusqu'à atteindre une nouvelle position correspondant au nouveau rapport sélectionné.

Le premier mode de réalisation avec rail et écrou n'est pas limité à un type de motoréducteur comportant des pignons d'axes parallèles comme illustré figure 3a. Les axes des pignons du motoréducteur peuvent être perpendiculaires.

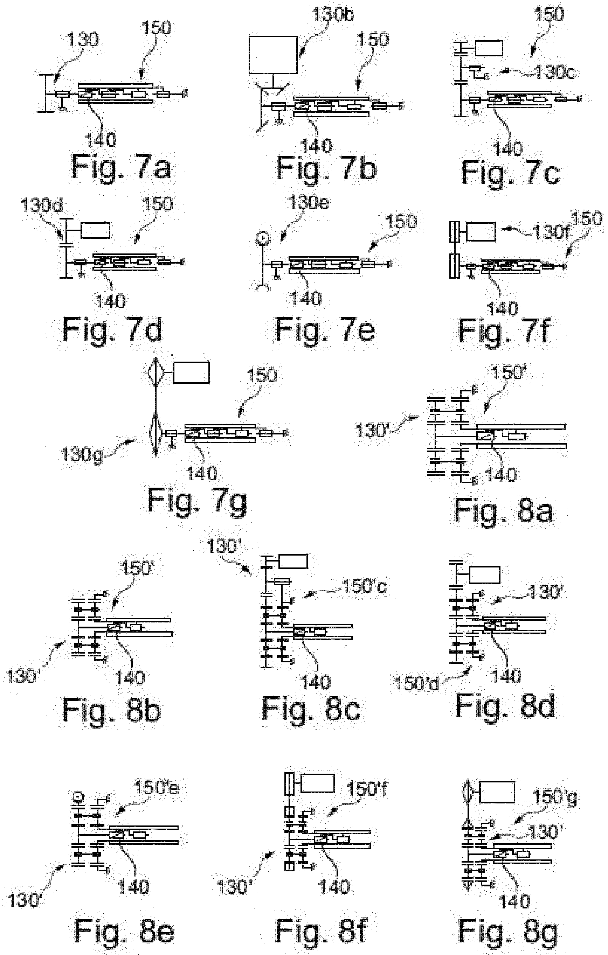

Alors que dans les variantes illustrées du premier mode de réalisation, en particulier l'exemple illustré figure 3a, le motoréducteur comporte plusieurs pignons 135, la figure 7a correspond à un exemple pour lequel le réducteur 130 est limité à un seul pignon.

La figure 7b illustre une variante dans laquelle l'actionneur de changement de vitesse 150 comporte un engrenage conique 130_{b} .

La figure 7c illustre une variante dans laquelle l'actionneur de changement de vitesse 150 comporte un engrenage droit ou hélicoïdal avec un étage ou plus 130_{c}.

La figure 7d illustre une variante dans laquelle l'actionneur de changement de vitesse 150 comporte un engrenage droit ou hélicoïdal sans étage 130_{d}.

La figure 7e illustre une vis sans fin 130ₑ d'une variante d'actionneurde changement de vitesse 150.

Les figures 7f et 7g représentent respectivement des variantes comportant un actionneur de changement de vitesse 150 avec une courroie 130_{f}, respectivement une chaîne 130_{g}.

De façon similaire, les figures 8a à 8g représentent schématiquement différentes variantes d'un actionneur de changement de vitesse selon le deuxième mode de réalisation de l'invention.

La figure 8a correspond à l'exemple illustré figure 5a avec le train épicycloïdal 130'.

La figure 8b illustre une variante dans laquelle l'actionneur de changement de vitesse 150_{b} est à train épicycloïdal 130' et engrenage conique.

La figure 8c illustre une variante dans laquelle l'actionneur de changement de vitesse
150_{c} est à train épicycloïdal 130' et engrenage droit ou hélicoïdal avec un étage ou plus .La figure 8d illustre une variante dans laquelle l'actionneur de changement de vitesse 150_{d} est à train épicycloïdal 130' et un engrenage droit ou hélicoïdal sans étage .La figure 8e illustre une variante dans laquelle l'actionneur de changement de vitesse 150ₑ est à train épicycloïdal 130' et vis sans fin. Les figures 8f et 8g représentent respectivement des variantes comportant un actionneur de changement de vitesse 150_{f} à train épicycloïdal 130' et courroie, respectivement 150_{g} à train épicycloïdal 130' et chaîne.

## Revendications

1. Dispositif de changement de vitesse (100) pour vélo à assistance électrique (900), ledit dispositif présentant une pluralité de k rapports entre un premier rapport dit rapport n°1 et un rapport supérieur dit rapport k, ledit dispositif de changement de vitesse comportant
- une série de k pignons d'entrée (20, Fr₁ à Frₖ) agencés pour tourner librement autour d'un arbre de sélection (200 ) d'axe X₂ , ledit arbre de sélection logeant une vis sans fin (132) et une navette (155),
- une série de k pignons de sortie (30, F₁ à Fₖ) d'axe X₃, solidaires en rotation d'un arbre creux (230) agencé pour entourer un axe de pédalier du vélo à assistance électrique (900), et
- un actionneur de changement de vitesse (150) agencé pour déplacer la navette (155) le long de la vis sans fin (132) entre une pluralité de k positions (P₁ à Pₖ) et engager un rapport sélectionné.

2. Dispositif de changement de vitesse selon la revendication 1, la navette (155) étant agencée pour, dans chaque position (Pi) correspondant à un rapport (i), engager un des pignons d'entrée (Fri) pour qu'il engrène avec le pignon de sortie correspondant (Fᵢ), les pignon d'entrée (Fri) et pignon de sortie (Fᵢ) étant associés audit rapport (i).

3. Dispositif de changement de vitesse selon la revendication 1 ou 2, la navette (155) étant agencée pour loger au moins un organe de rappel (152).

4. Dispositif de changement de vitesse selon l'une quelconque des revendications précédentes tel que la navette (155) entoure la vis sans fin (132).

5. Dispositif de changement de vitesse selon l'une quelconque des revendications précédentes comportant une liaison pivot.

6. Dispositif de changement de vitesse selon l'une quelconque des revendications précédentes tel que l'actionneur de changement de vitesse (150) comporte un moteur (140), et un réducteur (130) ou un train épicycloïdal (130').

7. Dispositif de changement de vitesse selon l'une quelconque des revendications précédentes tel que l'actionneur de changement de vitesse (150) soit agencé pour déplacer la navette (155) entre les positions prédéfinies (Pᵢ, P₁ à Pₖ) suite à une commande de sélection de rapport provenant d'un conducteur du vélo à assistance électrique et/ou d'une unité de pilotage (800) du vélo à assistance électrique.

8. Dispositif de changement de vitesse selon l'une quelconque des revendications précédentes tel que la navette (155) est apte à prendre une position dite position neutre (P0) pour laquelle aucun rapport de vitesse n'est engagé.

9. Dispositif de changement de vitesse selon l'une quelconque des revendications 1 à 8 comportant un rail (134) le long duquel se déplace la navette (155), ledit rail étant notamment situé dans l'arbre de sélection (200).

10. Dispositif de changement de vitesse selon l'une quelconque des revendications 1 à comportant un train épicycloïdal (130') avec une couronne intérieure (30ᵢₙₜ) et une couronne extérieure (30ₑₓₜ).

11. Vélo à assistance électrique comportant un dispositif de changement de vitesse (100) selon l'une quelconque des revendications précédentes.

## Patentansprüche

1. Gangwechselvorrichtung (100) für ein Elektrofahrrad (900), wobei die Vorrichtung eine Vielzahl von k Gängen zwischen einem ersten Gang, dem sogenannten Gang Nr. 1, und einem höheren Gang, dem sogenannten Gang k, aufweist, wobei die Gangwechselvorrichtung umfasst - eine Reihe von k - Eingangsritzeln (20, Fr₁ bis Frk), die so angeordnet sind, dass sie frei um eine Auswahlwelle (200) mit der Achse X2 drehen können, wobei die Auswahlwelle eine Schnecke (132) und einen Schlitten (155) aufnimmt, - (155) - eine Reihe von k - Ausgangsritzeln (30, F₁ bis Fk) mit der Achse X3, die drehfest mit einer Hohlwelle (230) verbunden sind, die so angeordnet ist, dass sie eine Tretlagerachse des Elektrofahrrads (900) umgibt, und - (900). einen Gangwechselaktuator (150), der so angeordnet ist, dass er den Schlitten (155) entlang der Schnecke (132) zwischen einer Vielzahl von k Positionen (P1 bis Pk) bewegt und einen ausgewählten Gang einlegt.

2. Gangwechselvorrichtung nach Anspruch 1, wobei der Schlitten (155) so angeordnet ist, dass er in jeder Position (Pi), die einem Gang (i) entspricht, eines der - Eingangsritzel - Eingangsritzel (Fri) einrückt, damit es mit dem entsprechenden Ausgangsritzel (Fri) kämmt, wobei das Eingangsritzel (Fri) und das Ausgangsritzel (Fi) dem genannten Gang (i) zugeordnet sind.

3. Gangwechselvorrichtung nach Anspruch 1 oder 2, wobei der Schlitten (155) so angeordnet ist, dass er mindestens ein Rückstellelement (152) aufnimmt.

4. Gangwechselvorrichtung nach einem der vorhergehenden Ansprüche, wobei der Schlitten (155) die Schnecke (132) umgibt.

5. Gangwechselvorrichtung nach einem der vorhergehenden Ansprüche, die eine Drehgelenkverbindung aufweist.

6. Gangwechselvorrichtung nach einem der vorhergehenden Ansprüche, wobei der Gangwechselaktuator (150) einen Motor (140) sowie ein Untersetzungsgetriebe (130) oder ein Planetengetriebe (130') umfasst.

7. Gangwechselvorrichtung nach einem der vorhergehenden Ansprüche, wobei der Gangwechselaktuator (150) so angeordnet ist, dass er den Schlitten (155) zwischen den vordefinierten Positionen (Pi, P₁ bis Pk) infolge eines Gangwahlbefehls eines Fahrers - des Elektrofahrrads - des Mobilitätsfahrzeugs und/oder einer Steuereinheit (800) - des Elektrofahrrads - des Mobilitätsfahrzeugs bewegt.

8. Gangwechselvorrichtung nach einem der vorhergehenden Ansprüche, wobei der Schlitten (155) in der Lage ist, eine sogenannte Neutralstellung (PO) einzunehmen, in der kein Gang eingelegt ist.

9. Gangwechselvorrichtung nach einem der Ansprüche 1 bis 8, die eine Schiene (134) umfasst, entlang derer sich der Schlitten (155) bewegt, wobei die genannte Schiene insbesondere in der Auswahlwelle (200) angeordnet ist.

10. Gangwechselvorrichtung nach einem der Ansprüche - 1 bis - 1 bis θ, die ein Planetengetriebe (130') mit einem Innenhohlrad (30int) und einem Außenhohlrad - (30ext) - (901ext) umfasst.

11. Elektrofahrrad, das eine Gangwechselvorrichtung (100) nach einem der vorhergehenden Ansprüche umfasst.

## Claims

1. Gearshift device (100) for an electric-assist bicycle (900), said device having a plurality of k gear ratios between a first ratio called ratio No. 1 and a higher ratio called ratio k, said gearshift device comprising - a series of k input sprockets (20, Fr₁ to Frk) arranged to rotate freely around a selection shaft (200) of axis X2, said selection shaft housing a worm screw (132) and a shuttle (155), - a series of k output sprockets (30, F₁ to Fk) of axis X3, rotationally integral with a hollow shaft (230) arranged to surround a bottom bracket axle of the electric-assist bicycle (900), and a gearshift actuator (150) arranged to move the shuttle (155) along the worm screw (132) between a plurality of k positions (P1 to Pk) and engage a selected gear ratio.

2. Gearshift device according to claim 1, the shuttle (155) being arranged to, in each position (Pi) corresponding to a gear ratio (i), engage one of the input sprockets (Fri) so that it meshes with the corresponding output sprocket (Fri), the input sprocket (Fri) and output sprocket (Fi) being associated with said gear ratio (i).

3. Gearshift device according to claim 1 or 2, the shuttle (155) being arranged to house at least one return member (152).

4. Gearshift device according to any one of the preceding claims wherein the shuttle (155) surrounds the worm screw (132).

5. Gearshift device according to any one of the preceding claims comprising a pivot connection.

6. Gearshift device according to any one of the preceding claims wherein the gearshift actuator (150) comprises a motor (140), and a reduction gear (130) or an epicyclic gear train (130').

7. Gearshift device according to any one of the preceding claims wherein the gearshift actuator (150) is arranged to move the shuttle (155) between the predefined positions (Pi, P₁ to Pk) following a gear selection command from a rider of the mobility vehicle and/or a control unit (800) of the mobility vehicle.

8. Gearshift device according to any one of the preceding claims wherein the shuttle (155) is capable of assuming a position called the neutral position (PO) for which no gear ratio is engaged.

9. Gearshift device according to any one of claims 1 to 8 comprising a rail (134) along which the shuttle (155) moves, said rail being located in particular within the selection shaft (200).

10. Gearshift device according to any one of claims 1 to 8 comprising an epicyclic gear train (130') with an inner ring gear (30int) and an outer ring gear (901ext).

11. Electric-assist bicycle comprising a gearshift device (100) according to any one of the preceding claims.
